# FASCICULE DE BREVET EUROPEEN

(11) **EP 3 371 334 B1**
(45) Date de publication et mention de la délivrance du brevet: **29.01.2025**
(21) Numéro de dépôt: 16809130.4
(22) Date de dépôt: 04.11.2016
(51) Int. Cl.: C21D 1/00, C22F 1/10

(54) **DISPOSITIF ET PROCÉDÉ DE GENERATION D'UNE MICROSTRUCTURE A GRADIENT DE STRUCTURE SUR UNE PIECE AXISYMETRIQUE**
VORRICHTUNG UND VERFAHREN ZUR ERZEUGUNG EINER STRUKTURGRADIENT-MIKROSTRUKTUR AUF EINEM ACHSSYMMETRISCHEN TEIL
DEVICE AND METHOD FOR GENERATING A STRUCTURAL-GRADIENT MICROSTRUCTURE ON AN AXISYMMETRIC PART

(30) Priorité: 06.11.2015 FR 1560653
(43) Date de publication de la demande: 12.09.2018
(73) Titulaire: SAFRAN, 75015 Paris (FR)
(72) Inventeur: FRANCHET, Jean-Michel, Patrick, Maurice, 75018 Paris (FR); KLEIN, Gilles, Charles, Casimir, 95540 Mery Sur Oise (FR)
(74) Mandataire: Cabinet Beau de Loménie
(86) Numéro de dépôt international: PCT/FR2016/052859
(87) Numéro de publication internationale: WO 2017/077248

(56) Documents cités:
- US-A- 5 312 497
- US-A- 5 527 020
- US-A- 6 145 194
- US-A1- 2010 252 151
- US-B1- 6 660 110
- US-B1- 8 496 872
- J. GAYDA ET AL: "The Effect of Dual Microstructure Heat Treatment on an Advanced Nickel-Base Disk Alloy", SUPERALLOYS 2004 - TENTH INTERNATIONAL SYMPOSIUM ON SUPERALLOYS; CHAMPION, PA, UNITED STATES - SEP 19-23 2004, 1 January 2004 (2004-01-01), Warrendale, Pa., US, pages 323 - 329, XP055269844, ISBN: 978-0-87339-576-2, DOI: 10.7449/2004/Superalloys_2004_323_329

## Description

### Arrière-plan de l'invention

L'invention concerne la génération de microstructure à gradient de structure dans des pièces mécaniques, et plus particulièrement dans des pièces axisymétriques évidées en leur centre.

Les normes environnementales, telle que la norme ACARE 2020, ainsi que les exigences de réduction de coût de possession c'est-à-dire les coûts de fonctionnement et d'entretien, imposées par les avionneurs, obligent les motoristes à développer des turboréacteurs avec des performances toujours meilleures, notamment avec une forte réduction de la consommation spécifique.

Cette recherche de réduction de consommation se traduit par un besoin d'améliorer le rendement du moteur en réduisant les ventilations des pièces chaudes et notamment des disques. Une conséquence directe de cette réduction de ventilation est alors un besoin de matériaux dont la capacité en température est accrue.

De nombreux progrès ont été réalisés dans le domaine des matériaux pour augmenter leur capacité en température: matériaux plus réfractaires, technique de la métallurgie des poudres, etc.

Toutefois, les gains en température sont très limités et la composition chimique du matériau ne permet pas à elle seule de remplir les objectifs fixés.

Un moyen de repousser les limites des matériaux est d'adapter la microstructure d'une pièce à la sollicitation mécanique locale de cette pièce. En effet, dans une pièce, les sollicitations mécaniques peuvent être de nature différentes suivant la zone considérée. Par conséquent la microstructure optimale peut varier au sein de la pièce en fonction des zones considérées. Autrement dit, on cherche à réaliser sur une même pièce, une microstructure duale ou à gradient.

Par exemple, pour un disque de turbine, qui est une des pièces les plus sollicitées thermo-mécaniquement dans le turboréacteur, les performances d'un matériau résident dans sa capacité à réaliser, pour une microstructure homogène optimisée, le meilleur compromis entre les différentes propriétés mécaniques requises, souvent contradictoires.

L'utilisation d'une microstructure duale ou à gradient pour la réalisation d'un disque de turbine permettrait d'éviter ce compromis. On aurait besoin d'une structure à grains fins en alésage de disque pour ses caractéristiques de traction et de fatigue à température moyenne et une structure à gros grains dans la jante du même disque afin d'avoir de meilleures propriétés en fluage et fissuration à haute température.

On entend par structure à grains fins une structure pour laquelle les grains sont bloqués par la phase / ou δ, et par structure à gros grains une structure pour laquelle les grains ne sont plus bloqués par ces phases.

En général la taille des grains dans une structure est donnée selon la norme ASTM dans laquelle 1 ASTM correspond à un grain de 225 µm, c'est-à-dire un gros grain, et 10 ASTM correspondent à un grain de 10 µm, c'est-à-dire à un grain fin.

On considère en général, pour tout type d'alliage, que la taille d'un grain correspond à celle d'un grain fin si elle est supérieure à 9 ASTM.

Selon les types d'alliage, la taille de grain à partir de laquelle on considère être en présence d'un gros grain est variable. En général, il faut qu'elle soit supérieure à 7 ASTM. C'est notamment le cas pour les alliages élaboré par métallurgie des poudres (N18, N19). Pour des alliages conventionnels de type AD730, R65, et U720, un grain sera considéré comme gros si sa taille est inférieure à 4 ASTM, et pour l'inco718, en fonction de la température atteinte, un grain sera considéré comme gros si sa taille est comprise entre 3 et 6 ASTM.

Un moyen connu pour réaliser des gradients de structure sur une pièce de type disque est un traitement thermique lui-même à gradient.

L'objectif de ce traitement par gradient de température est de réaliser un traitement de mise en solution à une température étagée dans la pièce de telle manière, que :
- dans la zone la plus chaude, la température soit supérieure à la température de dissolution de la phase bloquant les joints de grains, appelée également température de solvus, et
- dans la zone la moins chaude, la température soit inférieure à cette température de solvus.

Le joint de grains correspond à l'interface entre deux cristaux de même nature dans une structure polycristalline. Pour les alliages à base de nickel, les phases en question sont les phases / ou δ. Ainsi, dans les zones dont la température dépasse lors du traitement la température de solvus des phases / ou δ, les grains vont grossir pour former une structure favorable aux propriétés de fluage et de fissuration, alors que dans les zones dont la température restera inférieure à la température de solvus lors du traitement, la structure va conserver la taille de grain issue du forgeage qui est généralement relativement fine et favorable aux propriétés de traction et fatigue.

Pour réaliser ce type de traitement thermique, deux types de stratégie de traitement thermique sont connus.

Dans une première stratégie, l'ensemble du disque est porté dans un four à une température suffisante pour faire grossir le grain. Les zones pour lesquelles on souhaite conserver une structure à grains fins, c'est-à-dire les zones qui doivent être maintenues à une température inférieure à la température de solvus, sont refroidies par des systèmes de refroidissement locaux par air, comme décrits dans les documents US 5527020 et US 5312497, ou par isolation, comme décrit dans le document US 6660110. Ces systèmes présentent l'inconvénient d'être lourds à mettre en place et peu flexibles en fonction de la géométrie de la pièce.

Plus particulièrement, dans le document US 5312497, la partie extérieure du disque est chauffée par un suscepteur en graphite lui-même chauffé par un inducteur refroidit par eau et la partie intérieure du disque est refroidie par un serpentin à air comprimé. Ce système présente l'inconvénient supplémentaire de devoir fonctionner sous vide sous peine de voir le suscepteur en carbone bruler.

Une seconde stratégie consiste à appliquer un chauffage local par induction sur la zone périphérique de la pièce. Comme décrit dans les documents US 4785147 et US 3741821, cette stratégie est classiquement utilisée pour renforcer localement par traitement des dents d'engrenage. Appliqué à un disque de turboréacteur, cela consiste à chauffer localement par induction l'extérieur de la pièce. Un courant haute fréquence est appliqué sur une bobine d'induction entourant la pièce de façon qu'un champ électromagnétique haute fréquence vienne se coupler à la pièce pour chauffer celle-ci. Il s'établit alors un gradient thermique dans la pièce entre l'extérieur chauffé par induction et le centre à l'air libre.

Cette dernière technique est clairement la plus adaptée pour générer des gradients thermiques dans un disque de turboréacteurs et donc pour générer des structures différentes entre la jante et l'alésage du disque.

Cependant, dans cette stratégie à un inducteur périphérique, la gestion des gradients est difficile et très peu pilotable. Par ailleurs, à cause du fort gradient de température, elle génère des contraintes thermomécaniques élevées au sein du disque pouvant aller jusqu'à la rupture du matériau.

De plus, ce mode de chauffage local par induction conduit à des refroidissements très rapides en surface lors de l'arrêt du chauffage. Or pour certains alliages, sensibles à la tapure de trempe, cela peut conduire à une fissuration du matériau.

Par ailleurs, une autre difficulté majeure dans la génération de microstructure à gradient de structure réside dans la gestion des températures notamment la température maximale qui doit être suffisante pour conduire à un grossissement de grain de la microstructure mais pas trop élevée pour ne pas avoir une taille de grain trop importante ou même atteindre la température de brulure du matériau qui conduirait alors à une dégradation irréversible du matériau.

Les matériaux pour lesquels l'écart entre la température de solvus et de brulure est faible sont par conséquents délicats à traiter avec les techniques connues mentionnées ci-dessus.

US2010/252151 et US5527020 décrivent des dispositifs de traitement thermique différentiel pour pièce axisymétrique évidée au centre.

### Objet et résumé de l'invention

L'invention vise à pallier les inconvénients mentionnés ci-dessus en proposant un dispositif de génération de microstructure à gradient de structure sur une pièce mécanique axisymétrique évidée en son centre permettant d'ajuster les températures dans les zones de la pièce mécanique à traiter en réduisant les contraintes thermomécaniques.

A cet effet, il est proposé un dispositif de génération d'une microstructure à gradient de structure sur une pièce mécanique axisymétrique évidée en son centre et possédant initialement une structure uniforme à grains fins, le dispositif comprenant un premier moyen de chauffage définissant une première enceinte pour recevoir la pièce mécanique et apte à chauffer la périphérie externe de ladite pièce mécanique à une première température supérieure à la température de solvus.

Selon une caractéristique générale de l'invention, le dispositif comprend un second moyen de chauffage définissant une seconde enceinte disposée à l'intérieur de la première enceinte et apte à chauffer la périphérie interne de ladite pièce mécanique à une seconde température inférieure à la température de solvus, l'espace entre la première enceinte et la seconde enceinte définissant un logement apte à accueillir la pièce mécanique axisymétrique évidée en son centre.

La présence d'un second moyen de chauffage monté en regard de la périphérie interne de la pièce annulaire à traiter permet, en coopération avec le premier moyen de chauffage monté sur la périphérie externe de la pièce mécanique annulaire à traiter, de chauffer simultanément à la fois l'extérieur et l'intérieur du disque grâce à deux moyens de chauffage distincts. Ce chauffage simultané depuis deux extrémités d'une pièce mécanique, deux extrémités circulaires dans le cas d'une pièce annulaire, permet de réguler le flux thermique grâce à l'énergie calorifique apportée depuis l'intérieur par le second moyen de chauffage.

Cette configuration à double moyen de chauffage peut même permettre d'inverser le flux thermique en cas de nécessité.

Ce schéma est particulièrement adapté aux disques de turboréacteurs qui ont un alésage évidé pour le passage de l'arbre central du moteur et qui peuvent se placer dans le logement prévu entre les deux dispositifs de chauffage.

Ce dispositif permet de garantir tout au long du traitement et surtout lors du maintien en température, un écart de température régulé entre les zones du disque. Il permet d'ajuster les températures dans les différentes zones de la pièce et surtout d'établir un état d'équilibre lors du maintien en température. Il permet en outre de piloter le positionnement de la zone de transition entre les structures gros grains et grains fins. Ces pilotages se font principalement en fonction des consignes de température données aux deux moyens de chauffage et en fonction de la géométrie de la pièce mécanique traitée.

Par exemple, le premier moyen de chauffage disposé à l'extérieur de la pièce mécanique à traiter peut permettre de chauffer localement l'extérieur du disque à une température suffisante pour faire grossir le grain, c'est-à-dire à une température supérieure à la température de solvus, et le second moyen de chauffage disposé à l'intérieur peut permettre de chauffer localement l'intérieur du disque à une température inférieure à la température de grossissement de grain du matériau. La régulation des deux moyens de chauffage va permettre d'établir un gradient thermique dans la pièce qui conduira à un gradient de microstructure.

Par ailleurs, contrairement au principe décrit dans la seconde stratégie utilisée notamment dans les documents US 4785147 et US 3741821 mentionnés ci-dessus, le dispositif de l'invention défini ci-dessus comportant les deux moyens de chauffage permet de limiter les contraintes thermomécaniques dès le début du traitement en ajustant l'écart de température entre l'alésage et la jante.

Ceci a pour effet d'éliminer tout risque d'apparition de fissures. Ceci est également vrai pour la phase de refroidissement. En effet, on pourra mieux contrôler le refroidissement de la surface extérieure en maintenant actif le second moyen de chauffage disposé à l'intérieur de la pièce mécanique à traiter pour contrôler le gradient également lors du refroidissement afin d'éviter les tapures de trempe.

Un premier exemple de pièces à traiter peut correspondre à des disques de turbine de diamètre extérieur d'environ 500 mm et de diamètre intérieur d'environ 100 à 150 mm réalisés en alliage à base nickel élaborés de manière conventionnelle de type inco718, ou de type AD730 ou Rene65 ou élaboré par métallurgie des poudres, de type N18 ou N19.

Un second exemple de pièce à traiter peut correspondre à des anneaux labyrinthes de diamètre extérieur d'environ 800 mm et de diamètre intérieur d'environ 650 mm réalisés en alliage à base nickel de type inco718, ou de type Waspaloy, AD730 ou Rene65.

Selon un premier aspect du dispositif de génération d'une microstructure à gradient de structure, celui-ci comprend une unité de commande configurée pour délivrer une première consigne de température au premier moyen de chauffage et une seconde consigne de température au second moyen de chauffage, l'unité de commande comportant un module de synchronisation apte à coordonner l'émission des première et seconde consignes de température pour que le premier moyen de chauffage et le second moyen de chauffage opèrent simultanément au cours d'une phase de chauffage et/ou d'une phase de refroidissement de la génération de microstructure à gradient de structure.

La commande simultanée des deux moyens de chauffage permet de contrôler en permanence les contraintes thermomécaniques imposées à la pièce mécanique à traiter, et notamment d'éviter qu'une température trop importante soit appliquée sur une zone de la pièce à traiter.

Selon un deuxième aspect du dispositif de génération d'une microstructure à gradient de structure, l'unité de commande comprend un module de régulation de la différence de température de chauffage entre le premier moyen de chauffage et le second moyen de chauffage apte à déterminer la valeur de la première consigne de température et la valeur de la seconde consigne de température en fonction du positionnement souhaité d'une zone intermédiaire entre une structure à gros grains et une structure à grains fins de la pièce mécanique.

La commande du dispositif peut ainsi être réalisée non pas en définissant des consignes de température, mais simplement en définissant une localisation précise d'une zone intermédiaire séparant la zone à gros grains de la zone à grains fins, l'unité de commande comportant une cartographie permettant de déterminer à partir de cette consigne de localisation de zone intermédiaire les consignes de température à transmettre aux premier et second moyens de chauffage.

Selon un troisième aspect du dispositif de génération d'une microstructure à gradient de structure, le premier et le second moyens de chauffage comprennent respectivement un premier inducteur et un second inducteur distincts.

L'utilisation d'un premier et second inducteur comme premier et second moyen de chauffage offre la possibilité d'un fonctionnement à l'air du dispositif contrairement aux principaux dispositifs de l'état de l'art.

En outre, l'utilisation d'inducteurs comme moyens de chauffage offre une commande simplifiée à partir du courant d'alimentation, les consignes de température déterminées par l'unité de commande étant transformées en consigne de courant d'alimentation des inducteurs par l'unité de commande avant leur émission vers les premier et second inducteurs.

Selon un quatrième aspect du dispositif de génération d'une microstructure à gradient de structure, l'unité de commande comprend un module de régulation de la fréquence des courants circulant respectivement dans le premier inducteur et dans le second inducteur.

La régulation de la fréquence des courants circulant dans le premier et le second inducteurs permet de piloter la zone de transition dans la pièce mécanique.

Pour ce genre d'application, les fréquences induites utilisées sont comprises entre 5 et 30 kHz, afin d'être dans un bouclage inductif à forte épaisseur de peau. Par forte épaisseur de peau d'un bouclage inductif, on entend un bouclage inductif pénétrant à coeur de la pièce à chauffer, pour de la fusion ou du chauffage volumique. Dans ce sens, un bouclage inductif à faible épaisseur de peau correspond à un bouclage inductif orienté vers la surface de la pièce et préconisé pour repousser, léviter, former, tout en chauffant.

Ce régime de fréquences a pour effet de chauffer la pièce préférentiellement en profondeur plutôt qu'en surface.

L'équilibre adaptatif de la fréquence est construit de manière à fonctionner entre 5 et 30 kHz, mais la fréquence est une résultante de la combinaison du coffret d'adaptation de l'inducteur, relatif au diamètre et au nombre de spires, et de la géométrie de la pièce. Deux pièces de géométrie différente placées dans un même ensemble composé du coffret d'adaptation et de l'inducteur fourniront un équilibre de fréquence différent mais compris dans la plage de 5 à 30 kHz.

L'invention a également pour objet un procédé de génération d'une microstructure à gradient de structure sur une pièce mécanique axisymétrique évidée en son centre, comprenant un traitement thermique d'une pièce mécanique possédant initialement une structure uniforme à grains fins, le traitement thermique comportant un premier chauffage de la périphérie externe de la pièce mécanique à une première température supérieure à la température de solvus.

Selon une caractéristique générale de l'invention, le traitement thermique comporte en outre un second chauffage de la périphérie interne de la pièce mécanique à une seconde température inférieure à la température de solvus.

Selon un premier aspect du procédé de génération d'une microstructure à gradient de structure, celui-ci comprend une émission d'une première consigne de température de chauffage de la périphérie externe de la pièce mécanique et une émission d'une seconde consigne de température de chauffage de la périphérie interne de la pièce mécanique, lesdites deux émissions étant synchronisées pour que le premier chauffage et le second chauffage opèrent simultanément au cours d'un phase de chauffage et/ou d'une phase de refroidissement de la génération de microstructure à gradient de structure.

Selon un deuxième aspect du procédé de génération d'une microstructure à gradient de structure, celui-ci comprend une régulation de la différence de température de chauffage entre le premier chauffage et le second chauffage, les valeurs de la première consigne de température et de la seconde consigne de température étant déterminées en fonction du positionnement souhaité de la zone intermédiaire entre la structure à gros grains et la structure à grains fins de la pièce.

Selon un troisième aspect du procédé de génération d'une microstructure à gradient de structure, le premier chauffage et le second chauffage sont respectivement réalisés par la circulation d'un premier courant dans un premier inducteur et la circulation d'un second courant dans un second inducteur distinct du premier inducteur.

Selon un quatrième aspect du procédé de génération d'une microstructure à gradient de structure, celui-ci comprend une régulation de la fréquence des premier et second courants circulant respectivement dans le premier inducteur et dans le second inducteur.

L'invention a aussi pour autre objet un disque de turbine comprenant au moins une portion de microstructure à gradient de structure générée par le procédé défini ci-dessus.

L'invention a également pour objet, une turbomachine comprenant au moins un disque de turbine tel que défini ci-dessus.

L'invention a encore pour autre objet, un aéronef comprenant au moins une turbomachine tel que définie ci-dessus.

### Brève description des dessins.

L'invention sera mieux comprise à la lecture faite ci-après, à titre indicatif mais non limitatif, en référence aux dessins annexés sur lesquels :
- la figure 1 présente une vue en perspective d'un dispositif de génération d'une microstructure à gradient de structure selon l'invention ;
- la figure 2 représente schématiquement une vue en coupe du dispositif de la figure 1 ;
- la figure 3 présente une représentation graphique de la topographie thermique à l'intérieur d'une pièce mécanique placée à dans le dispositif de la figure 1.

### Description détaillée de modes de réalisation

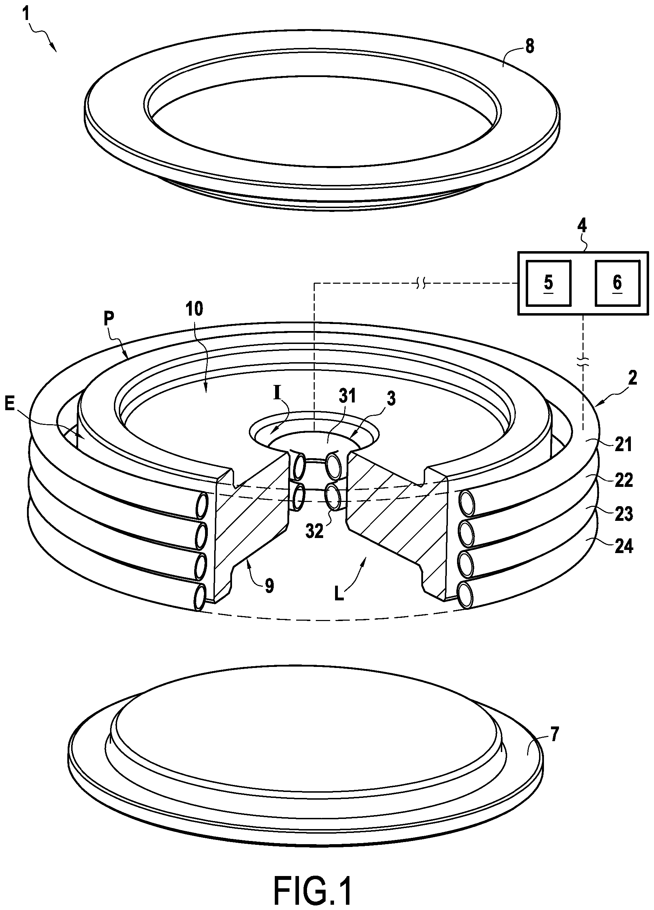

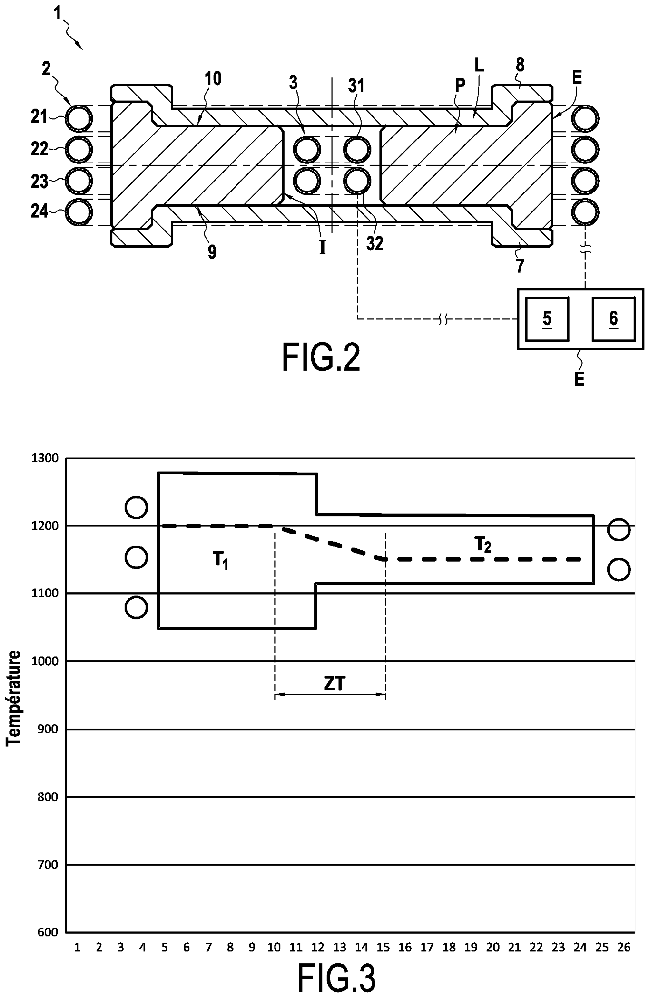

Les figures 1 et 2 présentent respectivement une vue en perspective et une vue en coupe d'un dispositif de génération d'une microstructure à gradient de structure selon l'invention.

Sur les deux figures est présentée une pièce mécanique P annulaire, par exemple un disque de turbine, placé dans un dispositif 1 de génération d'une microstructure à gradient de structure. Avant tout traitement thermique par le dispositif 1, la pièce mécanique P possède une structure uniforme à grains fins.

Le dispositif 1 comprend un premier inducteur de chauffage 2 et un second inducteur 3 de chauffage. Pour une meilleure compréhension visuelle, la pièce mécanique P et les premier et second inducteurs de chauffage 2 et 3 sont représentés sur la figure 1 seulement en partie.

Dans l'exemple de réalisation illustré sur les figures 1 et 2, le premier inducteur de chauffage 2 est formé de quatre spires 21, 22, 23 et 24 de rayon supérieur au rayon externe de la pièce mécanique P annulaire. Le premier inducteur de chauffage 2 est configuré pour chauffer la périphérie externe E de la pièce mécanique P à une première température T₁ supérieure à la température de solvus, c'est-à-dire supérieure à la température de dissolution de la phase bloquant les joints de grains.

Le second inducteur de chauffage 3 est formé de deux spires 31 et 32 de rayon inférieur au rayon interne de la pièce mécanique P annulaire. Le second inducteur de chauffage 3 est configuré pour chauffer la périphérie interne I de ladite pièce mécanique P à une seconde température T₂ inférieure à la température de solvus.

Dans tout le texte, les termes « interne » et « externe » sont utilisés en référence à l'axe de révolution X de la pièce mécanique P et des spires 21 à 24 et 31 et 32 des premier et second inducteurs 2 et 3.

Le premier inducteur de chauffage 2 forme une première enceinte fermée à l'intérieur de laquelle est disposée une seconde enceinte formée par le second inducteur de chauffage 3. Les deux enceintes formées par les deux inducteurs de chauffage 2 et 3 définissent ainsi un logement annulaire L s'étendant entre les deux enceintes. Le logement L est conformé pour recevoir la pièce mécanique P annulaire.

Grâce à l'utilisation d'inducteurs de chauffage, le dispositif 1 peut fonctionner à l'air et ne nécessite pas la mise en place d'une structure sous vide dans laquelle la pièce mécanique P doit être placée.

Le dispositif 1 comprend en outre une unité de commande 4 à laquelle le premier inducteur de chauffage 2 et le second inducteur de chauffage 3 sont électriquement raccordés. L'unité de commande 4 comprend des moyens de saisie, non représentés, permettant de saisir, selon le cas, deux consignes de température distinctes pour les deux inducteurs de chauffage 3 et 4 ou bien la localisation d'une zone intermédiaire. La localisation de la zone intermédiaire permet de définir l'emplacement de la zone de transition entre les grains fins et les gros grains dans la pièce mécanique P après le traitement par le dispositif 1.

L'unité de commande 4 est configurée pour délivrer, à partir des informations saisies à l'aide des moyens de saisie, une première consigne de température au premier inducteur de chauffage 2 et une seconde consigne de température au second inducteur de chauffage 3.

Comme illustré sur la figure 3 qui présente une représentation graphique de la topographie thermique dans la pièce mécanique P, la première consigne de température et la seconde consigne de température sont choisies de manière à ce que la partie externe E de la pièce mécanique soit à la première température T₁, par exemple pour une pièce mécanique P en alliage à base nickel de l'ordre de 1040 à 1060°C pour un alliage de type Inco 718, ou de l'ordre de 1120 à 1140°C pour un alliage de type AD730 ou de type Rene65, ou de l'ordre de 1160 à 1180°C pour un alliage réalisé avec une métallurgie des poudres de type N19, et que la partie interne I de la pièce mécanique P soit à la seconde température T₂, par exemple pour une pièce mécanique P en alliage à base nickel de l'ordre de 980 à 1000°C pour un alliage de type Inco 718, ou de l'ordre de 1060 à 1080°C pour un alliage de type AD730 ou de type Rene65, ou de l'ordre de 1110 à 1130°C pour un alliage réalisé avec une métallurgie des poudres de type N19. La zone intermédiaire ZT entre la zone à gros grains et la zone à grains fins peut être d'une longueur comprise entre 5 et 50 mm.

L'unité de commande 4 comprend un module de régulation 5 de la différence de température de chauffage entre le premier inducteur de chauffage et le second inducteur de chauffage configuré pour déterminer la valeur de la première consigne de température et de la seconde consigne de température en fonction du positionnement souhaité d'une zone intermédiaire entre une structure à gros grains et une structure à grains fins de la pièce mécanique.

L'unité de commande 4 comporte en outre un module de synchronisation 6 configuré pour coordonner l'émission des première et seconde consignes de température déterminées par l'unité de commande 4 pour que le premier inducteur de chauffage 2 et le second inducteur de chauffage 3 opèrent simultanément au cours d'une phase de chauffage et/ou d'une phase de refroidissement de la génération de microstructure à gradient de structure.

La coordination des deux inducteurs de chauffage 2 et 3 à l'aide du moyen de synchronisation 6 de l'unité de commande 4 permet de chauffer simultanément à la fois l'extérieur et l'intérieur du disque tout en contrôlant à chaque instant les températures de chauffage subies par les différentes zones de la pièce mécanique P. De plus, en chauffant à la fois depuis l'intérieur et l'extérieur de la pièce, les températures appliquées à la pièce mécanique P par les deux inducteurs 2 et 3 peuvent rester inférieures aux températures maximales admises par la pièce mécanique P et ainsi éviter tout risque de brûlure de la pièce P puisque la zone interne de la pièce mécanique reçoit aussi de l'énergie calorifique du second inducteur de chauffage 3.

Ainsi, tout au long du traitement et surtout lors du maintien en température, les inducteurs de chauffage 2 et 3 maintiennent un écart de température régulé entre les zones de la pièce mécanique P.

Notamment, lors de la phase de refroidissement, l'unité de commande 4 contrôle la chute de température en ajustant les consignes de température appliquées aux premier et second inducteurs 2 et 3 de sorte à constamment maintenir le même écart de température.

Le procédé de traitement par le dispositif 1 peut durer entre 15 min et 2 h.

En outre, dans l'exemple de réalisation illustré sur les figures 1 et 2, le dispositif 1 comprend deux isolants 7 et 8 placés chacun respectivement sur la face inférieure 9 et sur la face supérieure 10 de la pièce mécanique P annulaire. Le premier isolant 7 est placé sur la face inférieure 9 de la pièce mécanique P de manière à couvrir toute la surface inférieure 9 de la pièce mécanique P s'étendant de la périphérie externe E à la périphérie interne I ainsi que le second inducteur 3. A l'inverse, le second isolant 8 est placé sur la face supérieure 10 de la pièce mécanique P de manière à couvrir toute la surface supérieure 10 de la pièce mécanique P s'étendant de la périphérie interne I à la périphérie externe E ainsi que le second inducteur 3.

Ces isolants sont particulièrement utiles pour des pièces mécaniques P de très grandes dimensions pour lesquelles la distance entre le premier inducteur 2 et le second inducteur 3 est très importante au point que les pertes calorifiques le long de la pièce peuvent altérer l'efficacité de chauffage par les deux inducteurs 2 et 3.

L'invention fourni ainsi un dispositif de génération de microstructure à gradient de structure sur une pièce mécanique axisymétrique évidée en son centre permettant d'ajuster les températures dans les zones de la pièce mécanique à traiter tout en réduisant les contraintes thermomécaniques subies par la pièce.

## Revendications

1. Dispositif (1) de génération d'une microstructure à gradient de structure sur une pièce mécanique (P) axisymétrique évidée en son centre, le dispositif étant destiné à recevoir une pièce mécanique ayant initialement une structure uniforme à grains fins, le dispositif (1) comprenant un premier moyen de chauffage (2) définissant une première enceinte configurée pour recevoir la pièce mécanique (P), le premier moyen de chauffage étant configuré pour chauffer la périphérie externe (E) de ladite pièce mécanique (P) à une première température (T₁) supérieure à la température de solvus,
**caractérisé en ce qu'**il comprend un second moyen de chauffage (3) définissant une seconde enceinte disposée à l'intérieur de la première enceinte et configurée pour chauffer la périphérie interne (I) de ladite pièce mécanique (P) à une seconde température (T₂) inférieure à la température de solvus, l'espace entre la première enceinte et la seconde enceinte définissant un logement (L) apte à accueillir la pièce mécanique (P) axisymétrique évidée en son centre,
une unité de commande (4) configurée pour délivrer une première consigne de température au premier moyen de chauffage (2) et une seconde consigne de température au second moyen de chauffage (3),
l'unité de commande (4) comportant un module de synchronisation (6) configuré pour coordonner l'émission des première et seconde consignes de température pour que le premier moyen de chauffage (2) et le second moyen de chauffage (3) opèrent simultanément au cours d'une phase de chauffage et/ou d'une phase de refroidissement de la génération de microstructure à gradient de structure, et un module de régulation (5) de la différence de température de chauffage entre le premier moyen de chauffage (2) et le second moyen de chauffage (3) configurée pour déterminer la valeur de la première consigne de température et la valeur de la seconde consigne de température en fonction du positionnement souhaité d'une zone intermédiaire (ZT) entre une structure à gros grains et une structure à grains fins de la pièce mécanique.

2. Dispositif (1) selon la revendication 1, dans lequel le premier et le second moyens de chauffage (2 et 3) comprennent respectivement un premier inducteur et un second inducteur distincts.

3. Dispositif (1) selon la revendication 2, dans lequel l'unité de commande (4) comprend un module de régulation de la fréquence des courants circulant respectivement dans le premier inducteur et dans le second inducteur.

4. Procédé de génération d'une microstructure à gradient de structure sur une pièce mécanique (P) axisymétrique évidée en son centre, comprenant un traitement thermique d'une pièce mécanique (P) possédant initialement une structure uniforme à grains fins, le traitement thermique comportant un premier chauffage de la périphérie externe (E) de la pièce mécanique (P) à une première température (T₁) supérieure à la température de solvus, le traitement thermique comportant en outre un second chauffage de la périphérie interne (I) de la pièce mécanique (P) à une seconde température (T₂) inférieure à la température de solvus
**caractérisé en ce qu'**il comprend une régulation de la différence de température de chauffage entre le premier chauffage et le second chauffage, les valeurs de la première consigne de température et de la seconde consigne de température étant déterminées en fonction du positionnement souhaité de la zone intermédiaire (ZT) entre la structure à gros grains et la structure à grains fins de la pièce.

5. Procédé selon la revendication 4, comprenant une émission d'une première consigne de température de chauffage de la périphérie externe (E) de la pièce mécanique (P) et une émission d'une seconde consigne de température de chauffage de la périphérie interne (I) de la pièce mécanique (P), lesdites deux émissions étant synchronisées pour que le premier chauffage et le second chauffage opèrent simultanément au cours d'un phase de chauffage et/ou d'une phase de refroidissement de la génération de microstructure à gradient de structure.

6. Procédé selon l'une des revendications 4 ou 5, dans lequel le premier chauffage et le second chauffage sont respectivement réalisés par la circulation d'un premier courant dans un premier inducteur (2) et la circulation d'un second courant dans un second inducteur (3) distinct du premier inducteur (2).

7. Procédé selon la revendication 6, comprenant une régulation de la fréquence des premier et second courants circulant respectivement dans le premier inducteur (2) et dans le second inducteur (3).

## Patentansprüche

1. Vorrichtung (1) zur Erzeugung einer Mikrostruktur mit einem Strukturverlauf auf einem achsensymmetrischen mechanischen Teil (P), das in seinem Zentrum ausgehöhlt ist, wobei die Vorrichtung dazu bestimmt ist, ein mechanisches Teil aufzunehmen, das anfänglich eine gleichmäßige feinkörnige Struktur aufweist, wobei die Vorrichtung (1) ein erstes Heizmittel (2) umfasst, das ein erstes Gehäuse definiert, das dazu ausgestaltet ist, das mechanische Teil (P) aufzunehmen, wobei das erste Heizmittel dazu ausgestaltet ist, den äußeren Umfang (E) des mechanischen Teils (P) auf eine erste Temperatur (T₁) aufzuheizen, die höher ist als die Solvus-Temperatur,
**dadurch gekennzeichnet, dass** es ein zweites Heizmittel (3) umfasst, das ein zweites Gehäuse definiert, das innerhalb des ersten Gehäuses angeordnet und dazu ausgestaltet ist, den inneren Umfang (I) des mechanischen Teils (P) auf eine zweite Temperatur (T₂) aufzuheizen, die niedriger als die Solvus-Temperatur ist, wobei der Raum zwischen dem ersten Gehäuse und dem zweiten Gehäuse eine Aufnahme (L) definiert, die dazu geeignet ist, das achsensymmetrische mechanische Teil (P), das in seinem Zentrum ausgehöhlt ist, unterzubringen,
eine Steuereinheit (4), die dazu ausgestaltet ist, einen ersten Temperatur-Einstellwert an das erste Heizmittel (2) und einen zweiten Temperatur-Einstellwert an das zweite Heizmittel (3), wobei die Steuereinheit (4) ein Synchronisationsmodul (6) beinhaltet, das dazu ausgestaltet ist, die Ausgabe des ersten und zweiten Temperatur-Einstellwerts so zu koordinieren, dass das erste Heizmittel (2) und das zweite Heizmittel (3) im Verlauf einer Heizphase und/oder einer Abkühlphase der Erzeugung der Mikrostruktur mit einem Strukturverlauf gleichzeitig arbeiten, sowie ein Modul zur Regelung (5) der Differenz der Aufheiztemperatur zwischen dem ersten Heizmittel (2) und dem zweiten Heizmittel (3), das dazu ausgestaltet ist, den Wert des ersten Temperatur-Einstellwerts und den Wert des zweiten Temperatur-Einstellwerts in Abhängigkeit von der gewünschten Positionierung einer Zwischenzone (ZT) zwischen einer grobkörnigen Struktur und einer feinkörnigen Struktur des mechanischen Teils zu bestimmen.

2. Vorrichtung (1) nach Anspruch 1, wobei das erste und das zweite Heizmittel (2 und 3) jeweils einen ersten und einen zweiten, voneinander unterschiedlichen Induktor umfassen.

3. Vorrichtung (1) nach Anspruch 2, wobei die Steuereinheit (4) eine Modul zur Regelung der Frequenz der Ströme umfasst, die jeweils in dem ersten Induktor und in dem zweiten Induktor zirkulieren.

4. Verfahren zur Mikrostruktur mit einem Strukturverlauf auf einem achsensymmetrischen mechanischen Teil (P), das in seinem Zentrum ausgehöhlt ist, umfassend eine Wärmebehandlung eines mechanischen Teils (P), das anfänglich eine gleichmäßige feinkörnige Struktur besitzt, wobei die Wärmebehandlung ein erstes Aufheizen des äußeren Umfangs (E) des mechanischen Teils (P) auf eine erste Temperatur (T₁) beinhaltet, die höher als die Solvus-Temperatur ist, wobei die Wärmebehandlung ferner ein zweites Aufheizen des inneren Umfangs (I) des mechanischen Teils (P) auf eine zweite Temperatur (T₂) beinhaltet, die niedriger ist als die Solvus-Temperatur, **dadurch gekennzeichnet, dass** es eine Regelung der Differenz der Aufheiztemperatur zwischen dem ersten Aufheizen und dem zweiten Aufheizen umfasst, wobei die Werte des ersten Temperatur-Einstellwerts und des zweiten Temperatur-Einstellwerts in Abhängigkeit von der gewünschten Positionierung einer Zwischenzone (ZT) zwischen einer grobkörnigen Struktur und einer feinkörnigen Struktur des mechanischen Teils bestimmt werden.

5. Verfahren nach Anspruch 4, umfassend eine Ausgabe eines ersten Einstellwerts für die Aufheiztemperatur des äußeren Umfangs (E) des mechanischen Teils (P) und eine Ausgabe eines zweiten Einstellwerts für die Aufheiztemperatur des äußeren Umfangs (I) des mechanischen Teils (P), wobei die zwei Ausgaben so synchronisiert werden, dass das erste Aufheizen und das zweite Aufheizen im Verlauf einer Heizphase und/oder einer Abkühlphase der Erzeugung der Mikrostruktur mit einem Strukturverlauf gleichzeitig laufen.

6. Verfahren nach einem der Ansprüche 4 oder 5, wobei das erste Aufheizen und das zweite Aufheizen jeweils durch Zirkulieren eines ersten Stroms in einem ersten Induktor (2) und durch Zirkulieren eines zweiten Stroms in einem zweiten Induktor (3), der sich von dem ersten Induktor (2) unterscheidet, verwirklicht werden.

7. Verfahren nach Anspruch 6, umfassend eine Regelung der Frequenz der ersten und der zweiten Ströme, die jeweils in dem ersten Induktor (2) und in dem zweiten Induktor (3) zirkulieren.

## Claims

1. A device (1) for generating a microstructure with a structure gradient in an axisymmetric mechanical part (P) having a hollow center and initially possessing a uniform structure with fine grains, the device (1) comprising first heater means (2) defining a first shell for receiving the mechanical part (P) and suitable for heating the outer periphery (E) of the mechanical part (P) to a first temperature (T₁) higher than the solvus temperature,
the device being **characterized in that** it comprises second heater means (3) defining a second shell arranged inside the first shell and suitable for heating the inner periphery (I) of said mechanical part (P) to a second temperature (T₂) lower than the solvus temperature, with the space between the first shell and the second shell defining a housing (L) suitable for receiving the axisymmetric mechanical part (P) having a hollow center, a control unit (4) configured to deliver a first temperature setpoint to the first heater means (2) and a second temperature setpoint to the second heater means (3), the control unit (4) including a synchronization module (6) suitable for coordinating the delivery of the first and second temperature setpoints so that the first heater means (2) and the second heater means (3) operate simultaneously during a stage of heating and/or a stage of cooling in the generation of a microstructure with a structure gradient, and a regulator module (5) for regulating the heating temperature difference between the first heater means (2) and the second heater means (3) so as to determine the value of the first temperature setpoint and the value of the second temperature setpoint as a function of the position desired for an intermediate zone (ZT) between a fine-grain structure and a coarse-grain structure in the mechanical part.

2. A device (1) according to claim 1, wherein the first and second heater means (2 and 3) respectively comprise first and second distinct induction coils.

3. A device (1) according to claim 2, wherein the control unit (4) includes a module for regulating the frequency of the electricity respectively powering the first induction coil and the second induction coil.

4. A method of generating a microstructure with a structure gradient in an axisymmetric mechanical part (P) having a hollow center, the method comprising subjecting a mechanical part (P) initially possessing a uniform structure with fine grains to heat treatment, the heat treatment comprising a first heating operation of heating the outer periphery (E) of the mechanical part (P) to a first temperature (T₁) higher than the solvus temperature, the heat treatment further comprising a second heating operation of heating the inner periphery (I) of the mechanical part (P) to a second temperature (T₂) lower than the solvus temperature
the method being **characterized in that** it includes regulating the temperature difference between the first and second heating operations, the values of the first and second temperature setpoints being determined as a function of the position desired for the intermediate zone (ZT) between the coarse-grain structure and the fine-grain structure within the part.

5. A method according to claim 4, comprising delivering a first temperature setpoint for heating the outer periphery (E) of the mechanical part (P) and delivering a second temperature setpoint for heating the inner periphery (I) of the mechanical part (P), said delivery of the first and second setpoints being synchronized so that the first and second heating operations take place simultaneously during a stage of heating and/or a stage of cooling in the generation of microstructure with a structure gradient.

6. A method according to any one of claims 4 or 5, wherein the first and second heating operations are respectively performed by independently powering distinct first and second induction coils (2, 3).

7. A method according to claim 6, including regulating the respective frequencies at which the first and second induction coils (2 and 3) are powered.
